# FASCICULE DE BREVET EUROPEEN

(11) **EP 2 027 736 B1**
(45) Date de publication et mention de la délivrance du brevet: **13.01.2010**
(21) Numéro de dépôt: 07724265.9
(22) Date de dépôt: 16.04.2007
(51) Int. Cl.: H04W 8/18

(54) **CONTROLE D'ACCES AU MODE DIRECT D'UN SYSTEME DE COMMUNICATION CELLULAIRE**
ZELLULARES KOMMUNIKATIONSSYSTEM IN DIREKTMODUS-ZUGANGSKONTROLLE
CELLULAR COMMUNICATION SYSTEM IN DIRECT MODE ACCESS CONTROL

(30) Priorité: 09.05.2006 FR 0604118
(43) Date de publication de la demande: 25.02.2009
(73) Titulaire: SAGEM COMMUNICATIONS SAS, 92848 Rueil Malmaison Cedex (FR)
(72) Inventeur: DUMONT, Jérémie, F-91190 Gif-sur-Yvette (FR)
(74) Mandataire: Maillet, Alain
(86) Numéro de dépôt international: PCT/EP2007/003327
(87) Numéro de publication internationale: WO 2007/128382

(56) Documents cités:
- WO-A-00/30389
- WO-A-01/62026
- WO-A-2005/060182
- GB-A- 2 336 070
- US-A1- 2005 107 083

## Description

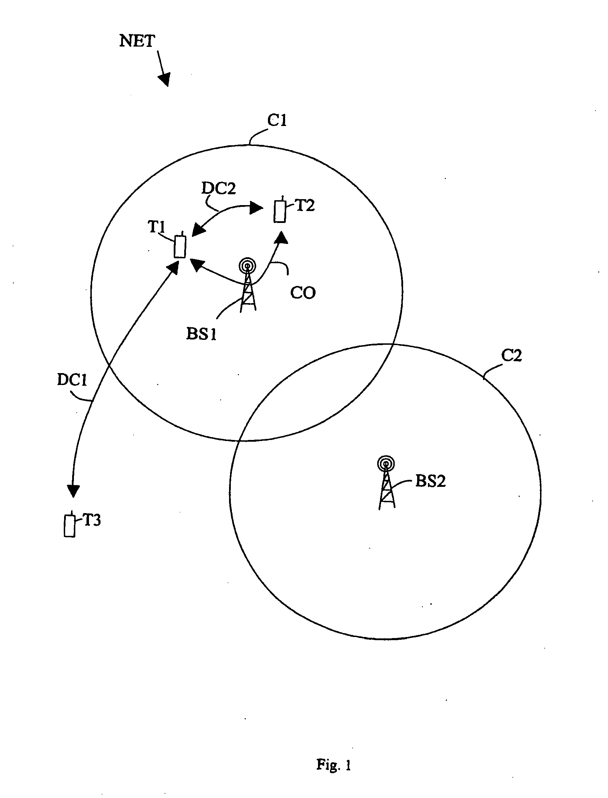

La présente invention concerne un procédé de communication radiofréquence en mode direct entre terminaux mobiles. Elle concerne également un terminal mobile mettant en oeuvre ledit procédé. La Fig. 1 représente un schéma synoptique d'un exemple d'un réseau de communication cellulaire NET. Le réseau de communication cellulaire NET repose sur une infrastructure réseau constituée entre autres de stations de base BSi dont le rôle est d'établir et de gérer les communications entre terminaux mobiles. Chaque station de base BSi couvre une zone géographique appelée cellule Ci et l'ensemble des cellules délimite la couverture du réseau de communication cellulaire NET.

Le document GB-A-2336070 décrit un procédé d'établissement par un terminal mobile d'une communication radiofréquence en mode direct avec au moins un autre terminal mobile, dans lequel l'identité d'un réseau de communication cellulaire est mémorisée dans une mémoire du terminal mobile et l'identité d'un réseau de communication cellulaire est reçue par le terminal mobile.

Le document WO-A1-00/30389 décrit un procédé dans lequel un terminal mobile peut obtenir services dans un réseau seulement dans le cas ou, en comparant l'identité du réseau reçue avec l'identité de réseau mémorisée, les deux identités sont identiques.

L'établissement par un terminal mobile T1 d'une communication CO avec un terminal mobile T2 est classiquement mis en oeuvre par l'intermédiaire entre autres d'au moins une des stations de base BSi du réseau de communication cellulaire NET. Selon l'exemple de la Fig. 1, la communication CO est établie entre les terminaux mobiles T1 et T2 par l'intermédiaire de la station de base BS1 car les terminaux mobiles T1 et T2 se situent dans la même cellule, en l'occurrence 1a cellule C1.

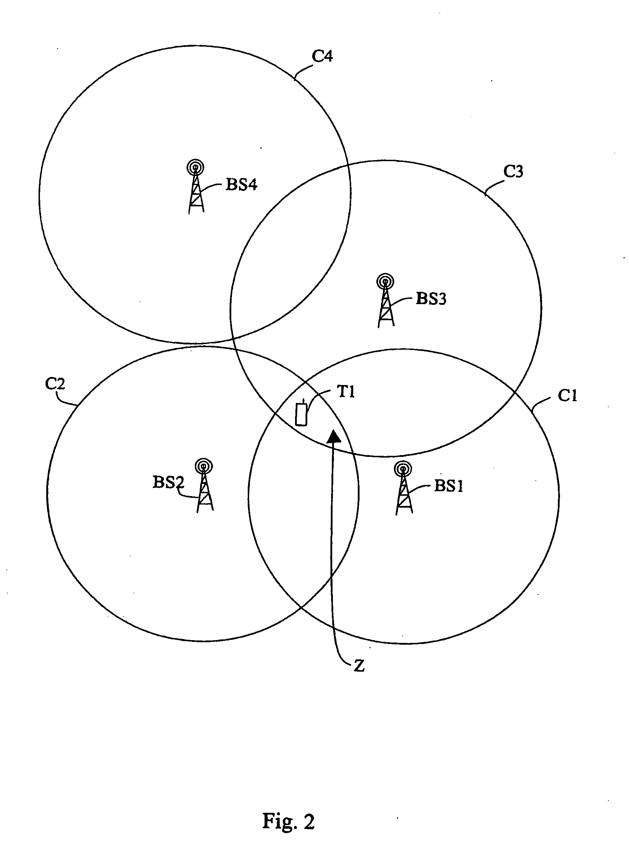

Chaque opérateur de télécommunications Oj administre un réseau de communication cellulaire NETj en déployant une infrastructure réseau sur une zone géographique. Ainsi, en référence avec la Fig. 2, une même zone géographique Z peut être couverte par plusieurs cellules de différents réseaux de communication cellulaire, en l'occurrence les cellules C1, C2 et C3. Les cellules C1 et C2 appartiennent à un réseau de communication cellulaire NET1 administré par un opérateur O1 et les cellules C3 et C4 appartiennent à un autre réseau de communication cellulaire NET2 administré par un opérateur 02. Le terminal mobile T1 d'un utilisateur qui aurait souscrit un abonnement auprès de l'opérateur O1 est situé dans la zone géographique Z. De manière à ce que le terminal mobile T1 puisse établir une communication avec un autre terminal mobile (non représenté sur la Fig. 2), il est donc nécessaire que le terminal mobile T1 soit apte à distinguer parmi les stations de base BS1, BS2 et BS3 les stations de base appartenant au réseau de communication cellulaire NET1 des stations de base appartenant au réseau de communication cellulaire NET2. Pour cela, chaque réseau de communication cellulaire NET1 et NET2 diffuse des messages d'informations qui définissent son identité. Par exemple, dans le cas où les réseaux NET1 et NET2 sont des réseaux GSM (Global System for Mobile communication), ces messages d'informations sont diffusés périodiquement au travers de chacune des stations de base de chacun des réseaux NET1 et NET2 par voie balise sur le canal BCCH (Broadcast Control CHannel). Selon l'exemple de la Fig. 2, le terminal mobile T1 reçoit donc des messages d'informations de la part des stations de base BS1, BS2 et BS3 du fait qu'il se trouve sous leur couverture, que le terminal mobile T1 soit en veille ou en cours de communication.

Ainsi, le terminal mobile T1 récupère l'identité des réseaux de communication cellulaire NET1 et NET2 à partir des messages d'informations reçus qui lui permettent de déterminer que les stations de base BS1 et BS2 appartiennent à l'infrastructure du réseau de communication cellulaire NET1 et que la station de base BS3 appartient à l'infrastructure du réseau de communication cellulaire NET2. Ensuite, de manière classique, le terminal mobile T1 sélectionne une des deux stations de base BS1 et BS2 afin d'établir une demande d'établissement d'une communication auprès du réseau de communication cellulaire NET1.

L'établissement de telles communications est donc lié à l'utilisation d'un réseau de communication cellulaire. Cependant, le déploiement d'un tel réseau de communication est coûteux en terme d'équipements et les opérateurs privilégient souvent les zones géographiques les plus peuplées ou celles qui vont l'être dans un avenir proche. Ainsi, certaines zones géographiques ne sont pas ou que partiellement couvertes par le réseau de communication cellulaire, provoquant ainsi des désagréments pour un utilisateur qui ne peut établir de communication ou en maintenir une en cours dès lors qu'il se trouve dans une des zones géographiques non couvertes.

Dans une telle situation, certains opérateurs permettent que des communications en mode direct soient établies entre terminaux mobiles, c'est-à-dire des communications entre terminaux mobiles qui ne requièrent pas l'utilisation du réseau de communication cellulaire NET, que ces terminaux mobiles soient ou pas sous la couverture de ce réseau de communication cellulaire. Selon l'exemple de la Fig. 1, une communication DC1 entre le terminal mobile T1 et un terminal mobile T3 est établie alors que le terminal mobile T3 ne se trouve pas sous la couverture du réseau de communication cellulaire NET.

On peut noter qu'une communication en mode direct peut bien évidemment être établie entre terminaux mobiles lorsque ces (ou l'un de ces) terminaux mobiles sont (est) sous la couverture du réseau de communication cellulaire NET. Selon l'exemple de la Fig. 1, une communication en mode direct DC2 est établie entre le terminal mobile T1 et le terminal mobile T2 qui se trouvent tous les deux sous la couverture du réseau de communication cellulaire NET sans pour autant que le terminal mobile T1 utilise ce réseau de communication cellulaire pour établir une communication en mode direct.

On peut noter également qu'une communication en mode direct ne peut être établie que dans l'hypothèse où les terminaux mobiles impliqués dans la communication sont proches géographiquement du fait que ces terminaux mobiles ne peuvent pas émettre sur de longues distances de par leur puissance d'émission limitée.

De plus, l'établissement d'une communication en mode direct requiert des paramètres qui définissent la configuration de la communication, tels que par exemple une plage de fréquences dite plage de fréquences de communication en mode direct. Ces paramètres sont obtenus, préalablement à l'établissement d'une communication en mode direct, à partir d'une entité du réseau de communication cellulaire auquel un utilisateur a souscrit un abonnement, et sont mémorisés sur le terminal mobile utilisé par cet utilisateur.

L'établissement de communications en mode direct ne nécessitant pas l'utilisation d'un réseau de communication cellulaire, chaque utilisateur peut à sa convenance établir une communication en mode direct quelle que soit la zone géographique dans laquelle il se trouve, pouvant ainsi éventuellement perturber d'autres systèmes radiofréquences qui utiliseraient des fréquences de la plage de fréquences de communication en mode direct. Pour remédier à ce problème, il a été attribué à chaque opérateur, responsable de l'administration d'un réseau de communication cellulaire et souhaitant offrir la possibilité à ses abonnés de communiquer en mode direct, une plage de fréquences de communication en mode direct pour une zone géographique limitée. Cette zone géographique ne se limite pas à une seule cellule du réseau de communication cellulaire administré par un opérateur mais peut s'étendre à plusieurs, voire toutes les cellules de ce réseau de communication cellulaire.

Cette solution permet d'éviter que les fréquences de communication en mode direct attribuées à un opérateur pour une zone géographique ne perturbent dans cette zone géographique le fonctionnement d'autres systèmes radiofréquences. Cependant, elle ne permet pas à l'opérateur d'en contrôler l'usage qu'en fait chaque utilisateur, c'est-à-dire d'interdire l'établissement et donc la réception d'une communication en mode direct utilisant une de ces fréquences de communication à un utilisateur qui se trouverait en dehors de la zone géographique pour laquelle l'opérateur a obtenu légalement l'autorisation d'exploiter ces fréquences de communication.

Le but de la présente invention est donc de résoudre le problème soulevé ci-dessus de manière à limiter l'utilisation d'une des fréquences de communication en mode direct à la zone géographique pour laquelle l'opérateur a obtenu légalement l'autorisation d'exploiter ces fréquences.

Pour ce faire, la présente invention prévoit un procédé d'établissement par un terminal mobile d'une communication radiofréquence en mode direct avec au moins un autre terminal mobile. L'identité d'un tel réseau de communication cellulaire étant mémorisée dans une première mémoire dudit terminal mobile, le procédé est
**caractérisé en ce qu**'il comporte :
- une étape de réception de l'identité d'au moins un réseau de communication cellulaire par ledit terminal mobile,
- une étape de comparaison de ladite ou chacune desdites identités ainsi reçues avec ladite identité mémorisée,
- dans le cas où ladite ou l'une desdites identités ainsi reçues est identique à ladite identité mémorisée, une étape d'établissement de ladite communication radiofréquence en mode direct, et
- dans le cas où ladite ou aucune desdites identités ainsi reçues n'est identique à ladite identité mémorisée, une étape de blocage de l'établissement de ladite communication radiofréquence en mode direct.

L'utilisation de l'une des fréquences de communication en mode direct est alors limitée à la zone géographique pour laquelle l'opérateur a obtenu légalement l'autorisation d'exploiter ces fréquences en limitant l'établissement de ces communications.

La présente invention concerne également un procédé de réception par un terminal mobile d'une communication radiofréquence en mode direct. Ledit procédé est **caractérisé en ce qu**'il comporte :
- ladite étape de réception de l'identité d'au moins un réseau de communication cellulaire par ledit terminal mobile,
- ladite étape de comparaison de ladite ou chacune desdites identités ainsi reçues avec ladite identité mémorisée,
- dans le cas où ladite ou l'une desdites identités ainsi reçues est identique à ladite identité mémorisée, une étape de réception de ladite communication radiofréquence en mode direct, et
- dans le cas où ladite ou aucune desdites identités ainsi reçues n'est identique à ladite identité mémorisée, une étape de blocage de la réception de ladite communication radiofréquence en mode direct.

L'utilisation de l'une des fréquences de communication en mode direct est alors limitée à la zone géographique pour laquelle l'opérateur a obtenu légalement l'autorisation d'exploiter ces fréquences en limitant la réception de ces communications.

Selon un mode de réalisation de la présente invention, ladite ou l'une desdites identités ainsi reçues est mémorisée dans une seconde mémoire dudit terminal mobile. Dans ce cas, au cours de l'étape de comparaison ladite identité mémorisée dans ladite première mémoire est comparée à ladite identité mémorisée dans ladite seconde mémoire. Ce mode de réalisation est avantageux car il permet que le procédé d'établissement (ou de réception) par un terminal mobile d'une communication radiofréquence en mode direct soit exécuté bien que ledit terminal mobile ne se trouve pas sous la couverture d'un réseau de communication cellulaire au moment où l'utilisateur souhaite établir (ou recevoir) une telle communication.

Il est également avantageux que l'identité mémorisée dans ladite seconde mémoire soit mise à jour périodiquement par une entité d'un réseau de communication cellulaire. En effet, cette identité, considérée, on le rappelle, lors de l'étape de comparaison dans le cas où ledit terminal mobile ne se trouve pas sous la couverture d'un réseau de communication cellulaire au moment de l'exécution d'un procédé selon la présente invention, est l'identité du ou de l'un des derniers réseaux de communication sous la couverture duquel (desquels) ledit terminal mobile se trouvait avant le début de l'exécution dudit procédé. Ceci est particulièrement avantageux car ainsi l'opérateur responsable de l'administration du réseau de communication cellulaire dont l'identité est mémorisée dans la première mémoire est assuré que l'utilisateur peut établir (ou recevoir) une communication en mode direct dans le cas où l'utilisateur se trouve dans une zone avoisinant la zone géographique couverte par ce réseau de communication cellulaire.

De plus, il est avantageux que l'identité mémorisée dans la seconde mémoire soit mise à jour dès que ledit terminal mobile se trouve sous la couverture d'un nouveau réseau de communication cellulaire car ainsi un utilisateur dudit terminal mobile, qui ne pouvait jusque là établir (ou recevoir) de communication radiofréquence en mode direct suite à l'exécution du procédé d'établissement (ou de réception) ci-dessus, peut le faire dès que ledit terminal mobile se trouve sous la couverture du réseau de communication cellulaire dont l'identité est mémorisée dans la première mémoire.

Selon un mode de réalisation de la présente invention, au moins un desdits réseaux de communications cellulaires est un réseau de communication de type GSM.

La présente invention concerne également un terminal mobile prévu pour établir des communications radiofréquences en mode direct avec au moins un autre terminal mobile. Ce terminal mobile est **caractérisé en ce qu**'il comporte :
- des moyens pour mémoriser l'identité d'un réseau de communication cellulaire,
- des moyens pour recevoir l'identité d'un réseau de communication cellulaire,
- des moyens pour comparer l'identité de deux réseaux de communication cellulaire, et
- des moyens pour bloquer l'établissement de toute communication radiofréquence en mode direct.

Enfin, la présente invention concerne un terminal mobile prévu pour recevoir une communication radiofréquence en mode direct, **caractérisé en ce qu**'il comporte :
- des moyens pour mémoriser l'identité d'un réseau de communication cellulaire,
- des moyens pour recevoir l'identité d'un réseau de communication cellulaire,
- des moyens pour comparer l'identité de deux réseaux de communication cellulaire, et
- des moyens pour bloquer la réception de ladite communication radiofréquence en mode direct.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 représente un schéma d'un exemple d'établissement de communication au travers d'un réseau de communication cellulaire selon l'état de la technique.
La Fig.2 représente un schéma d'un exemple de zone géographique couverte par plusieurs réseaux de communication cellulaire.
La Fig.3a représente un diagramme des étapes du procédé d'établissement d'une communication en mode direct selon la présente invention.
La Fig. 3b représente un diagramme des étapes du procédé de réception d'une communication en mode direct selon la présente invention.
La Fig. 4 représente un schéma illustrant la mémorisation de données effectuée préalablement et au cours du procédé d'établissement décrit en relation avec la Fig. 3.
La Fig. 5 représente un schéma synoptique d'un terminal mobile prévu pour l'établissement ou la réception d'une communication en mode direct selon la présente invention.

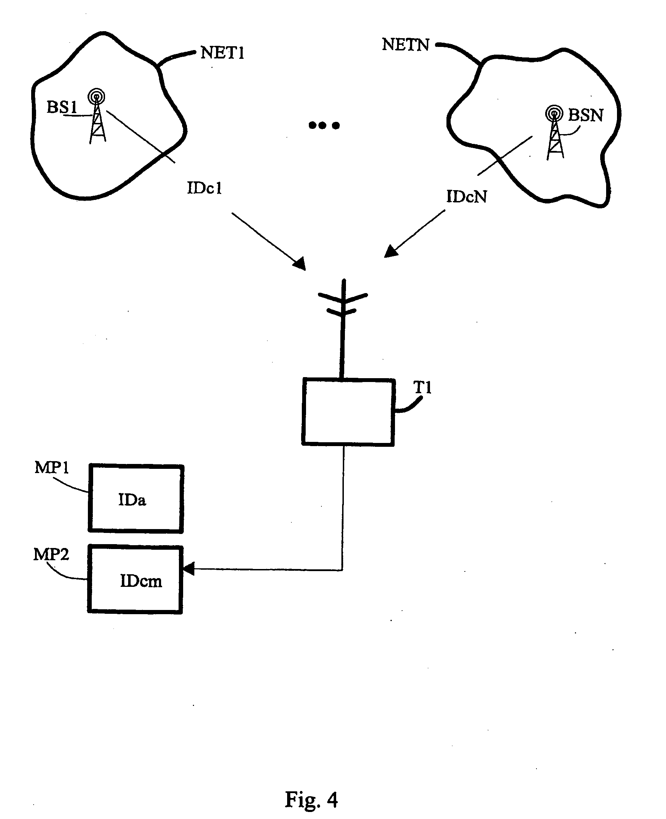

Préalablement à l'exécution du procédé d'établissement (ou de réception) d'une communication en mode direct selon la présente invention, un utilisateur a souscrit auprès d'un opérateur l'autorisation d'établir (ou de recevoir) des communications en mode direct dans une zone géographique limitée couverte par un réseau de communication NET1 administré par cet opérateur. Lors de cette souscription illustrée par la Fig. 4, l'opérateur a mémorisé l'identité IDa du réseau de communication cellulaire NET1 dans une mémoire, appelée par la suite mémoire MP1.

La mémoire MP1 peut, par exemple, être une mémoire d'un terminal mobile T1 utilisé par l'utilisateur ou une mémoire amovible telle qu'une mémoire de la carte SIM dans le cas où le terminal mobile T1 est un téléphone.

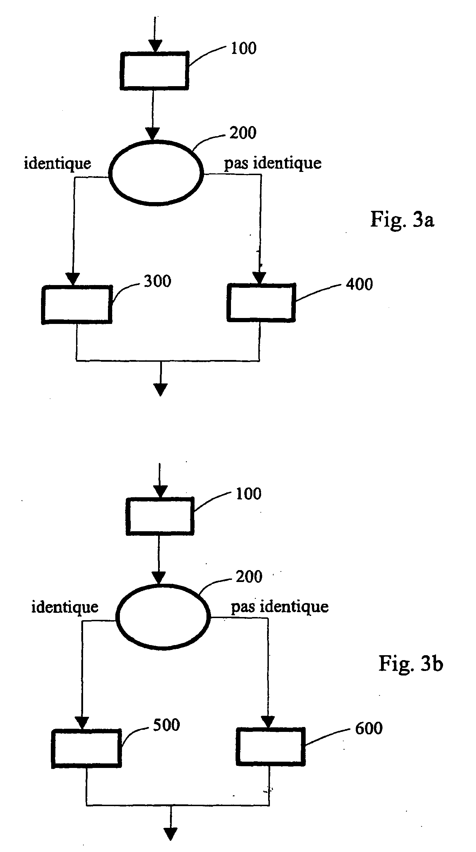

La Fig. 3a représente un diagramme des étapes du procédé d'établissement d'une communication radiofréquence en mode direct DC selon la présente invention. Ce procédé débute par une étape 100 de réception de l'identité IDci d'un réseau de communication cellulaire NETi par le terminal mobile T1 sous la couverture duquel il se trouve. Par exemple, dans le cas où ce réseau de communication cellulaire NETi est de type GSM, l'identité IDci est obtenue suite à la réception par le terminal mobile T1 de messages d'informations diffusés tel que cela a été décrit dans la partie introductive.

L'étape 100 est alors suivie d'une étape 200 au cours de laquelle il est comparé si l'identité IDci ainsi reçue est identique à l'identité IDa mémorisée dans la mémoire MP1.

Dans le cas où ladite identité IDci est identique à l'identité IDa, l'étape 200 est suivie d'une étape 300 d'établissement de la communication radiofréquence en mode direct DC.

Dans le cas où ladite identité IDci n'est pas identique à l'identité IDa, l'étape 200 est suivie d'une étape 400 de blocage d'établissement de toute communication radiofréquence en mode direct.

Dans le cas où le terminal mobile T1 est sous la couverture de plusieurs réseaux de communication cellulaire NETi (i=1,...,N) représentée respectivement par une de leur stations de base BSi tel qu'illustré par la Fig. 4, au cours de l'étape 100 l'identité IDci (i=1,...N) de chacun de ces réseaux de communication NETi est reçue et l'étape 200 de comparaison est répétée N fois pour chacune des identités IDci jusqu'à ce que l'une de ces identités soit identique à l'identité IDa ou que toutes les identités IDci aient été considérées.

Selon un mode de réalisation de la présente invention, l'identité IDci ainsi reçue est mémorisée dans une mémoire appelée par la suite mémoire MP2. L'identité ainsi mémorisée est appelée par la suite identité IDcm. Dans le cas où plusieurs identités IDci (i=1,...N) ont été reçues au cours de l'étape 100 et qu'aucune de ces identités n'est identique à l'identité IDa, l'identité IDcj destinée à être mémorisée dans la mémoire MP2 est par exemple choisie aléatoirement parmi toutes les identités IDci reçues. Dans le cas où l'une ces identités IDci est identique à l'identité IDa, cette identité est mémorisée dans la mémoire MP2.

Selon une variante de ce mode de réalisation, l'identité IDcm mémorisée dans la mémoire MP2 est mise à jour périodiquement tant que le terminal mobile T1 est sous la couverture d'un réseau de communication cellulaire.

Selon une autre variante de ce mode de réalisation, l'identité IDcm mémorisée dans la mémoire MP2 est mise à jour dès que le terminal mobile se trouve sous la couverture d'un nouveau réseau de communication cellulaire.

Selon un mode de réalisation de la présente invention, le terminal mobile T1 n'étant pas sous la couverture d'un réseau de communication cellulaire et l'identité IDcm d'un réseau de communication étant mémorisée dans la mémoire MP2, au cours de l'étape 100 l'identité IDci considérée est l'identité IDCm mémorisée dans la mémoire MP2.

Selon un mode de réalisation de la présente invention, au moins un des réseaux de communication cellulaire sous lequel se trouve le terminal mobile T1 est un réseau de communication de type GSM.

La Fig. 3b représente un diagramme des étapes du procédé de réception d'une communication radiofréquence en mode direct DC selon la présente invention. Ce procédé débute par l'étape 100 de réception de l'identité IDci précédemment décrite.

L'étape 100 est alors suivie de l'étape 200 également décrite précédemment. Dans le cas où ladite identité IDci est identique à l'identité IDa, l'étape 200 est suivie d'une étape 500 de réception de la communication radiofréquence en mode direct DC.

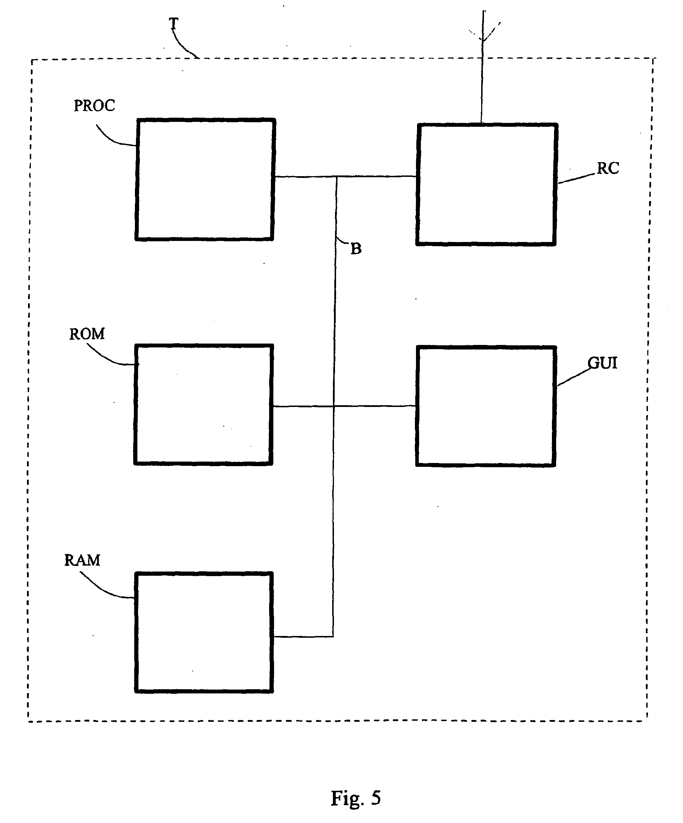

Dans le cas où ladite identité IDci n'est pas identique à l'identité IDa, l'étape 200 est suivie d'une étape 600 de blocage de la réception de toute communication radiofréquence en mode direct.La Fig. 5 représente un schéma d'un terminal mobile T prévu pour établir et/ou recevoir des communications radiofréquences en mode direct selon la présente invention. Le terminal mobile T est adapté à mettre en oeuvre, par exemple au moyen d'un logiciel qu'il incorpore, les étapes du procédé d'établissement d'une communication en mode direct décrit en relation avec la Fig. 3a et/ou les étapes du procédé de réception d'une communication en mode direct décrit en relation avec la Fig. 3b.

Le terminal mobile T est par exemple, de manière non limitative, un dispositif de communication mobile tel qu'un téléphone mobile, un assistant personnel ou un ordinateur portable. Il comporte essentiellement un bus de communication B auquel sont reliés un processeur PROC, une mémoire non volatile ROM, une mémoire vive RAM, une interface homme/machine GUI et un dispositif RC d'émission/réception de signaux radiofréquences.

L'interface GUI comporte des moyens pour permettre à un utilisateur de demander l'établissement d'une communication en mode direct. Par exemple, et de manière non limitative, les moyens pour demander l'établissement d'une telle communication sont constitués d'un clavier alphanumérique et/ou d'une souris d'un ordinateur.

La mémoire non volatile ROM mémorise les programmes et les données, en particulier les identités IDa et IDcm, permettant entre autres la mise en oeuvre des étapes du procédé d'établissement respectivement de réception d'une communication en mode direct telles que décrites à la Fig. 3a et respectivement à la Fig. 3b. Par exemple, dans le cas d'un téléphone mobile, la mémoire ROM est une mémoire de la carte SIM ou une mémoire non amovible du téléphone mobile.

Le dispositif RC comporte des moyens radiofréquences pour obtenir l'identité d'un réseau de communication cellulaire dès lors que le terminal mobile T se trouve sous la couverture de ce réseau de communication cellulaire, des moyens pour établir, respectivement pour recevoir une communication radiofréquence en mode direct, et des moyens pour bloquer l'établissement, respectivement la réception de toute communication en mode direct.

Lors de la mise sous tension du terminal mobile T, les programmes du logiciel sont transférés de la mémoire ROM dans la mémoire vive RAM qui contient alors le code exécutable et les données nécessaires à la mise en oeuvre de l'un des modes de réalisation du procédé d'établissement ou de réception décrits ci-dessus.

## Revendications

1. Procédé d'établissement par un terminal mobile d'une communication radiofréquence en mode direct avec au moins un autre terminal mobile, l'identité (IDa) d'un réseau de communication cellulaire étant mémorisée dans une première mémoire (MP1) dudit terminal mobile, **caractérisé en ce qu'**il comporte :
- une étape (100) de réception de l'identité (IDci) d'au moins un réseau de communication cellulaire par ledit terminal mobile,
- une étape (200) de comparaison de ladite ou chacune desdites identités ainsi reçues (IDci) avec ladite identité mémorisée (IDa),
- dans le cas où ladite ou l'une desdites identités ainsi reçues (IDci) est identique à ladite identité mémorisée (IDa), une étape (300) d'établissement de ladite communication radiofréquence en mode direct, et
- dans le cas où ladite ou aucune desdites identités ainsi reçues (IDci) n'est identique à ladite identité mémorisée (IDa), une étape (400) de blocage de l'établissement de ladite communication radiofréquence en mode direct.

2. Procédé de réception par un terminal mobile d'une communication radiofréquence en mode direct, l'identité (IDa) d'un réseau de communication cellulaire étant mémorisée dans une première mémoire (MP1) dudit terminal mobile, **caractérisé en ce qu'**il comporte :
- une étape (100) de réception de l'identité (IDci) d'au moins un réseau de communication cellulaire par ledit terminal mobile,
- une étape (200) de comparaison de ladite ou chacune desdites identités ainsi reçues (IDci) avec ladite identité mémorisée (IDa),
- dans le cas où ladite ou l'une desdites identités ainsi reçues (IDci) est identique à ladite identité mémorisée (IDa), une étape (500) de réception de ladite communication radiofréquence en mode direct, et
- dans le cas où ladite ou aucune desdites identités ainsi reçues (IDci) n'est identique à ladite identité mémorisée (IDa), une étape (600) de blocage de la réception de ladite communication radiofréquence en mode direct.

3. Procédé selon la revendication 1 ou 2, **caractérisée en ce que** ladite ou l'une desdites identités ainsi reçue (IDci) est mémorisée dans une seconde mémoire (MP2) dudit terminal mobile.

4. Procédé selon la revendication 3, **caractérisé en ce que** ladite identité (IDcm) mémorisée dans ladite seconde mémoire est mise à jour périodiquement à partir d'une entité réseau (R) du ou de l'un des réseaux de communication cellulaire sous la couverture duquel se trouve ledit terminal mobile.

5. Procédé selon la revendication 3 ou 4, **caractérisé en ce que** ladite identité (IDcm) mémorisée dans ladite deuxième mémoire est mise à jour dès que ledit terminal mobile se trouve sous la couverture d'un nouveau réseau de communication cellulaire.

6. Procédé selon l'une des revendications 3 à 5, ledit terminal mobile n'étant pas sous la couverture d'un réseau de communication cellulaire, **caractérisé en ce qu'**au cours de l'étape de comparaison ladite identité (IDa) mémorisée dans ladite première mémoire est comparée à ladite identité (IDcm) mémorisée dans ladite seconde mémoire.

7. Procédé selon l'une des revendications précédentes, **caractérisé en ce qu'**au moins un desdits réseaux de communications cellulaires est un réseau de communication de type GSM.

8. Terminal mobile prévu pour établir une communication radiofréquence en mode direct avec au moins un autre terminal mobile, **caractérisé en ce qu'**il comporte :
- des moyens pour mémoriser l'identité d'un réseau de communication cellulaire,
- des moyens pour recevoir l'identité d'un réseau de communication cellulaire,
- des moyens pour comparer l'identité de deux réseaux de communication cellulaire, et
- des moyens pour bloquer l'établissement de ladite communication radiofréquence en mode direct
dans le cas où ladite identité reçue n'est identique à ladite identité mémorisée.

9. Terminal mobile prévu pour recevoir une communication radiofréquence en mode direct, **caractérisé en ce qu'**il comporte :
- des moyens pour mémoriser l'identité d'un réseau de communication cellulaire,
- des moyens pour recevoir l'identité d'un réseau de communication cellulaire,
- des moyens pour comparer l'identité de deux réseaux de communication cellulaire, et
- des moyens pour bloquer la réception de ladite communication radiofréquence en mode direct
dans le cas où ladite identité reçue n'est identique à ladite identité mémorisée.

10. Programme d'ordinateur stocké sur un support d'informations, **caractérisé en ce qu'**il comporte des instructions pour mettre en oeuvre le procédé selon l'une des revendications 1 à 7, lorsqu'il est chargé et exécuté par un dispositif de communication radiofréquence.

## Claims

1. Method of establishing, by a mobile terminal of a direct-mode radiofrequency communication with at least one other mobile terminal, the identity (LDa) of a cellular communications network stored in a first memory (MP1) of said mobile terminal, **characterised in that** it comprises:
- a step (100) of receiving the identity (IDci) of at least one cellular communications network by said mobile terminal,
- a step (200) of comparing said identity or each of said identities thus received (IDci) with said stored identity (IDa),
- in the event that said identity or one of said identities thus received (IDci) is identical to said stored identity (IDa), a step (300) of establishing said direct-mode radiofrequency communication, and
- in the event that said identity is not identical, or none of said identities thus received (IDci) is identical, to said stored identity (IDa), a step (400) of blocking the establishment of said direct-mode radiofrequency communication.

2. Method of receiving, by a mobile terminal of a direct-mode radiofrequency communication, the identity (IDa) of a cellular communications network stored in a first memory (MP 1) of said mobile terminal, **characterised in that** it comprises:
- a step (100) of receiving the identity (IDci) of at least one cellular communications network by said mobile terminal;
- a step (200) of comparing said identity or each of said identities thus received (IDci) with said stored identity (IDa),
- in the event that said identity or one of said identities thus received (IDci) is identical to said stored identity (IDa), a step (500) of receiving said direct-mode radiofrequency communication, and
- in the event that-said identity is not identical, or none of said identities thus received (IDci) is identical, to said stored identity (IDa), a step (600) of blocking the receiving of said direct-mode radiofrequency communication.

3. Method according to claim 1 or 2, **characterised in that** the said identity or one of said identities thus received (IDei) is stored in a second memory (MP2) of said mobile terminal.

4. Method according to claim 3, **characterised in that** said identity (IDcm) stored in said second memory is updated periodically from a network entity (R) of the cellular communications network or one of the cellular communications networks the coverage of which includes the said mobile terminal.

5. Method according to claim 3 or 4, **characterised in that** said identity (IDcm) stored in said second memory is updated as soon as the said mobile terminal comes under the coverage of a new cellular communications network.

6. Method according to one of claims 3 to 5, where the said mobile terminal is not under the coverage of a cellular communications network, **characterised in that** in the course of the comparison step the said identity (IDa) memorised in the said first memory is compared with said identity (IDcm) memorised in the said second memory.

7. Method according to one of the preceding claims, **characterised in that** at least one of said cellular communications networks is a communications network of the GSM type.

8. Mobile terminal intended to establish a direct-mode radiofrequency communication with at least one other mobile terminal, **characterised in that** it comprises:
- means for storing the identity of a cellular communications network,
- means for receiving the identity of a cellular communications network,
- means for comparing the identity of two cellular communications networks, and
- means for blocking the establishment of said direct-mode radiofrequency communication in the event that said identity received is not identical to said identity stored.

9. Mobile terminal intended to receive a direct-mode radiofrequency communication, **characterised in that** it comprises:
- means for storing the identity of a cellular communications network,
- means for receiving the identity of a cellular communications network,
- means for comparing the identity of two cellular communications networks, and
- means for blocking the receiving of said direct-mode radiofrequency commmication in the event that said identity received is not identical to said identity stored.

10. Computer program stored on a data carrier, **characterised in that** it comprises instructions for carrying out the method according to one of claims 1 to 7, when it is loaded and run by a radiofrequency communication device.

## Patentansprüche

1. Verfahren zum Aufbau einer Direktmodus-HF-Verbindung durch ein mobiles Terminal mit wenigstens einem weiteren mobilen Terminal, wobei die Identität (IDa) eines zellularen Verbindungsnetzes in einem ersten Speicher (MP1) des mobilen Terminals gespeichert wird, **dadurch gekennzeichnet, dass** es aufweist:
- einen Schritt (100) zum Empfang der Identität (IDci) wenigstens eines zellularen Verbindungsnetzes durch das mobile Terminal,
- einen Schritt (200) zum Vergleich der oder jeder der so empfangenen Identitäten (IDci) mit der gespeicherten Identität (IDa),
- wenn die oder eine der so empfangenen Identitäten (IDci) gleich der gespeicherten Identität (IDa) ist, einen Schritt (300) zum Aufbau der Direktmodus-HF-Verbindung, und
- wenn die oder keine der so empfangenen Identitäten (IDci) gleich der gespeicherten Identität (IDa) ist, einen Schritt (400) zum Sperren des Aufbaus der Direktmodus-HF-Verbindung.

2. Verfahren zum Empfang durch ein mobiles Terminal einer Direktmodus-HF-Verbindung der Identität (IDa) eines zellularen Verbindungsnetzes, die in einem ersten Speicher (MP1) des mobilen Terminal gespeichert wird, **dadurch gekennzeichnet, dass** es aufweist:
- einen Schritt (100) zum Empfang der Identität (IDci) wenigstens eines zellularen Verbindungsnetzes durch das mobile Terminal,
- einen Schritt (200) zum Vergleich der oder jeder der so empfangenen Identitäten (IDci) mit der gespeicherten Identität (IDa),
- wenn die oder eine der so empfangenen Identitäten (IDci) gleich der gespeicherten Identität (IDa) ist, einen Schritt (500) zum Empfang der Direktmodus-HF-Verbindung, und
- wenn die oder keine der so empfangenen Identitäten (IDci) gleich der gespeicherten Identität (IDa) ist, einen Schritt (600) zum Sperren des Empfangs der Direktmodus-HF-Verbindung.

3. Verfahren nach Anspruch 1 oder 2, **dadurch gekennzeichnet, dass** die oder eine der so empfangenen Identitäten (IDci) in einem zweiten Speicher (MP2) des mobilen Terminals gespeichert wird.

4. Verfahren nach Anspruch 3, **dadurch gekennzeichnet, dass** die im zweiten Speicher gespeicherte Identität (IDcm) von einer Netzeinheit (R) des oder eines der zellularen Verbindungsnetze, in dessen Reichweite sich das mobile Terminal befindet, periodisch aktualisiert wird.

5. Verfahren nach Anspruch 3 oder 4, **dadurch gekennzeichnet, dass** die im zweiten Speicher gespeicherte Identität (IDcm) aktualisiert wird, sobald sich das mobile Terminal in Reichweite eines neuen zellularen Verbindungsnetzes befindet.

6. Verfahren nach einem der Ansprüche 3 bis 5, wobei sich das mobile Terminal nicht in Reichweite eines zellularen Verbindungsnetzes befindet, **dadurch gekennzeichnet, dass** im Laufe des Vergleichsschrittes die im ersten Speicher gespeicherte Identität (IDa) mit der im zweiten Speicher gespeicherten Identität (IDcm) verglichen wird.

7. Verfahren nach einem der vorherigen Ansprüche, **dadurch gekennzeichnet, dass** wenigstens eines der zellularen Verbindungsnetze ein Verbindungsnetz des Typs GSM ist.

8. Mobiles Terminal zum Aufbau einer Direktmodus-HF-Verbindung mit wenigstens einem weiteren mobilen Terminal, **gekennzeichnet durch**:
- Einrichtungen zum Speichern der Identität eines zellularen Verbindungsnetzes,
- Einrichtungen zum Empfang der Identität eines zellularen Verbindungsnetzes,
- Einrichtungen zum Vergleich der Identität zweier zellularer Verbindungsnetze, und
- Einrichtungen zum Sperren des Aufbaus der Direktmodus-HF-Verbindung, wenn die empfangene Identität nicht gleich der gespeicherten Identität ist.

9. Mobiles Terminal zum Empfang einer Direktmodus-HF-Verbindung, **gekennzeichnet durch**:
- Einrichtungen zum Speichern der Identität eines zellularen Verbindungsnetzes,
- Einrichtungen zum Empfang der Identität eines zellularen Verbindungsnetzes,
- Einrichtungen zum Vergleich der Identität zweier zellularer Verbindungsnetze, und
- Einrichtungen zum Sperren des Empfangs der Direktmodus-HF-Verbindung, wenn die empfangene Identität nicht gleich der gespeicherten Identität ist.

10. Auf einem Datenträger gespeichertes Computerprogramm, **dadurch gekennzeichnet, dass** es Befehle zur Durchführung des Verfahrens nach einem der Ansprüche 1 bis 7 aufweist, wenn es geladen und durch eine HF-Verbindungsvorrichtung ausgeführt wird.
